# EUROPÄISCHE PATENTSCHRIFT

(11) **EP 2 192 333 B1**
(45) Veröffentlichungstag und Bekanntmachung des Hinweises auf die Patenterteilung: **16.11.2011**
(21) Anmeldenummer: 09176329.2
(22) Anmeldetag: 18.11.2009
(51) Int. Cl.: F16J 15/02, E06B 7/23, E06B 3/62

(54) **Dichtungsprofil**
Seal profile
Profil d'étanchéité

(30) Priorität: 27.11.2008 DE 102008059327
(43) Veröffentlichungstag der Anmeldung: 02.06.2010
(73) Patentinhaber: SCHÜCO International KG, 33609 Bielefeld (DE)
(72) Erfinder: Bartsch, Martin, 33659, Bielefeld (DE); Fischer, Max, 59063, Hamm (DE); Gorlt, Nicole, 48149, Münster (DE)
(74) Vertreter: Dantz, Jan Henning

(56) Entgegenhaltungen:
- DE-A1- 19 506 246
- DE-T2- 69 730 786
- DE-U1- 29 512 401
- DE-U1- 29 811 582

## Beschreibung

Die vorliegende Erfindung betrifft ein Dichtungsprofil, insbesondere zur Einfassung von Isolierglasscheiben an einem Rahmen, mit einem an einem Profil montierbaren Haltefuß, einem an einer Glasscheibe anlegbaren Dichtwulst und einer Dichtlippe, wobei der Haltefuß und zumindest ein Teil des Dichtwulstes und der Dichtlippe aus einem witterungsbeständigen thermoplastischen Elastomer gebildet sind.

Aus der EP 1136297 ist eine Verglasungsdichtung bekannt, bei der eine Dichtlippe und ein Dichtwulst vorgesehen sind, wobei der Dichtwulst einen Schaumkern besitzt. Der Schaumkern ist dabei von einer Ummantelung aus einem witterungsbeständigen thermoplastischen Elastomer umgeben, aus dem auch die Dichtlippe ausgebildet ist. Dadurch kann die Elastizität des Dichtwulstes erhöht werden, die Wärmeisolierung der Dichtung ist durch den thermoplastischen Elastomer eher gering.

Die DE 20 2007 016186 offenbart eine elastische Profildichtung, bei der auf einer Seite gegenüber einer Haltenut ein Dichtungssteg und ein Stützsteg ausgebildet sind. Der Dichtungssteg ist dabei wulstförmig ausgebildet und umfasst eine ganz oder teilweise geschlossene Hohlkammer mit einer Füllung aus Moosgummi. Zwar kann dadurch ebenfalls die Elastizität des Dichtwulstes erhöht werden, gerade im Bereich der Wärmeisolierung ergeben sich jedoch Nachteile. Denn die Füllung der Hohlkammer mit Moosgummi kann die Wärmedämmung nur unwesentlich verbessern, weil sich der Wärmefluss zwischen der Dichtlippe und dem breiteren Dichtwulst ungehindert erstrecken kann und daher gerade der Randbereich einer Isolierglasscheibe mit dem Abstandshalter aus Metall nur begrenzt wärmeisoliert ist.

Die DE 697 30 786 offenbart ein Dichtungsprofil für Kraftfahrzeuge, bei dem durch ein Extrusionsverfahren der Querschnitt des Profils lokal geändert wird, wobei hierfür der Druck oder der Volumenstrom geändert wird.

In der DE 195 06 246 ist eine für Fenster einsetzbare Profildichtung für große Spaltweiten gezeigt, wobei hierfür eine Dichtlippe und ein Dichtwulst vorgesehen sind. Dabei wird für die Profildichtung ein unterschiedliches elastisches Material eingesetzt.

Die DE 295 12 401 offenbart ein strangförmiges Dichtungsprofil, bei dem ein geschlossen-zelliges Material, wie Moosgummi, mit einem elastomerem Material, wie Gummi, kombiniert wird.

Es ist daher Aufgabe der vorliegenden Erfindung, ein Dichtungsprofil zu schaffen, bei dem die Wärmeisolierung verbessert ist.

Diese Aufgabe wird mit einem Dichtungsprofil mit den Merkmalen des Anspruches 1 gelöst.

Erfindungsgemäß sind der Dichtwulst und die Dichtlippe auf der zur Glasscheibe gewandten Seite überwiegend durch einen Schaum ausgebildet. Dadurch wird eine erhebliche Verbesserung der Wärmeisolierung im Bereich des Dichtungsprofils erreicht, weil die Isolierglasscheibe in dem kritischen Randbereich besser vor Kälte geschützt ist, da die Dichtung keine Kältebrücke bildet, da das Material an dieser Seite weitgehend durch einen gut wärmeisolierenden Schaum gebildet ist. Dadurch werden die im Stand der Technik vorhandenen Wärmebrücken an dem Dichtwulst und/oder der Dichtlippe vermieden. Zudem werden die Vorteile des Einsatzes eines witterungsbeständigen thermoplastischen Elastomers genutzt, das an der Außenseite für eine Abschirmung des weicheren Schaummaterials sorgt.

Für eine besonders gute Abdichtung bilden der Dichtwulst und die Dichtlippe an einer Trennfläche zwischen dem thermoplastischen Elastomer und dem Schaum eine Dichtlinie aus, an der das thermoplastische Elastomer an der Glasscheibe anliegt. Denn das thermoplastische Elastomer besitzt eine höhere Festigkeit als der Schaum und kann dadurch langfristig eine bessere Abdichtung gewährleisten. Die Ausbildung der Dichtung derart, dass die Dichtlippe und der Dichtwulst gerade im Bereich der Trennfläche zwischen den beiden Materialien an der Glasscheibe anliegt, sorgt für ein optimales Ergebnis im Hinblick auf die Wärmedämmung und die Dichtfunktion. Dabei kann an dem Dichtwulst und der Dichtlippe zwischen dem thermoplastischen Elastomer und dem Schaum eine Trennebene ausgebildet sein und die äußere Oberfläche des Schaumes ist gegenüber einer Senkrechten zur Trennebene zurückspringend ausgebildet. Dadurch wird gewährleistet, dass bei einem Andrücken des Dichtungsprofils an die Glasscheibe der Bereich des thermoplastischen Elastomers eine Dichtlinie an der Glasscheibe ausbildet und das Material des Schaumes das thermoplastische Elastomer nicht versehentlich wegdrückt.

Gemäß einer bevorzugten Ausgestaltung der Erfindung ist an der Dichtlippe und dem Dichtwulst der Schaum an die Glasscheibe anlegbar. Der gut isolierende Schaum kann dabei das Raumvolumen zwischen der Glasscheibe und einem Profil soweit ausfüllen, dass eine gute Wärmedämmung vorhanden ist und je nach Anpressdruck der Schaum mit einer kleineren oder größeren Fläche auch an der Glasscheibe anliegt.

Vorzugsweise sind sowohl die Dichtlippe als auch der Dichtwulst an einer äußeren dem Profil zugewandten Seite aus einem witterungsbeständigen thermoplastischen Elastomer ausgebildet. Dadurch wird die Lebensdauer des Dichtungsprofils verbessert, da Umgebungseinflüsse auf die Dichtfunktion minimiert sind.

Um eine gute Wärmeisolierung zu erreichen, ist die Dichtlippe zu mindestens 30%, insbesondere zu mindestens 40 % aus Schaum hergestellt.

In einer vorteilhaften Ausgestaltung umgibt das thermoplastische Elastomer als Trägermaterial den Schaum im Wesentlichen V-förmig. Dadurch kann an der Außenseite eine Abdeckung des Schaumes erreicht werden, so dass eine gute Witterungsbeständigkeit gegeben ist. Innerhalb der V-förmigen Abdeckung ist dann der Schaum zur Ausbildung einer guten Wärmeisolierung angeordnet.

Der Schaum kann dabei aus elastischem Moosgummi gebildet sein, der durch Koextrusion zusammen mit dem thermoplastischen Elastomer hergestellt ist. Das thermoplastische Elastomer kann dabei als EPDM (Ethylen-Propylen-Dien-Terpolymere) ausgebildet sein. Auch andere thermoplastische Elastomere können eingesetzt werden.

Um das Dichtungsprofil auch in den Eckbereichen gut montieren zu können, ist vorzugsweise an der Dichtlippe oder dem Dichtwulst eine Vielzahl von Einschnitten vorgesehen, so dass das Dichtungsprofil leicht biegbar ist. Die Einschnitte können sich bis in einen mittleren Bereich des Dichtungsprofils erstrecken.

Um die Wärmeisolierung weiter zu verbessern, kann an dem Dichtungsprofil an dem Dichtwulst auf der zur Dichtlippe gegenüberliegenden Seite ein Auslegersteg ausgebildet sein, insbesondere ein Auslegersteg aus Schaummaterial. Dadurch wird der Bereich benachbart zu dem Dichtwulst durch den Auslegersteg überdeckt und ebenfalls isoliert.

Die Erfindung wird nachfolgend anhand eines Ausführungsbeispieles mit Bezug auf die beigefügten Zeichnungen näher erläutert. Es zeigen:
- Figur 1: eine Querschnittsansicht eines erfindungsgemäßen Dichtungsprofils;
- Figur 2: eine Detailansicht des Dichtungsprofils der Figur 1 in der montierten Po- sition; und
- Figur 3: eine Draufsicht auf das Dichtungsprofil der Figur 1 in einem Eckbereich.

Ein durch Koextrusion hergestelltes Dichtungsprofil 1 umfasst einen Haltefuß 2 zur Montage an einem Profil. Auf der zu dem Haltefuß 2 gegenüberliegenden Seite ist eine Dichtlippe 3 und ein Dichtwulst 4 ausgebildet. Als "Dichtwulst" wird der Abschnitt des Dichtungsprofils 1 bezeichnet, der ein größeres Volumen einnimmt und daher eher wulstförmig ausgebildet ist als die schmalere Dichtlippe. Es wäre natürlich gleichermaßen möglich, sowohl die Dichtlippe 3 als auch den Dichtwulst 4 mit dem gleichen Volumen herzustellen, so dass die Begriffe austauschbar verwendet werden können.

Der Haltefuß 2 umfasst eine Nut 5, die auf einen Vorsprung 8 eines Profil 7 aufsteckbar ist. In der montierten Position liegt sowohl die Dichtlippe 3 als auch der Dichtwulst 4 an einer Glasscheibe 9, insbesondere einem Rand einer Isolierglasscheibe, an. Sowohl die Dichtlippe 3 als auch der Dichtwulst 4 sind aus zwei unterschiedlichen Materialien hergestellt. An der Außenseite ist ein festerer Werkstoff in Form eines thermoplastischen Elastomers, insbesondere aus EPDM, vorgesehen, während auf der zur Glasscheibe 9 gewandten Seite ein Schaummaterial, insbesondere Moosgummi oder ein anderer gut wärmeisolierender Schaum angeordnet ist. Die Dichtlippe 3 umfasst einen der Glasscheibe 9 abgewandten Abschnitt 30 aus thermoplastischem Elastomer und der Dichtwulst 4 umfasst ebenfalls einen äußeren Abschnitt 40 aus thermoplastischem Elastomer, wobei die Abschnitte 30 und 40 zusammen mit dem Haltefuß 2 integral ausgebildet sind.

Auf der zur Glasscheibe 9 gewandten Seite ist an der Dichtlippe 3 ein innerer Abschnitt 31 aus Schaum und an dem Dichtwulst 4 ist ein innerer Abschnitt 41 aus Schaum hergestellt. Die Abschnitte 31 und 41 sind ebenfalls integral ausgebildet und gehen an einem Brückenbereich 32 ineinander über.

Um zu gewährleisten, dass der Dichtwulst 4 sicher an der Scheibe 9 zur Anlage kommt, wird der Dichtwulst 4 durch das Profil 7 gegen die Scheibe 9 gedrückt. Dabei ist der Dichtwulst 4 so gestaltet, dass eine Trennfläche 6 zwischen dem Abschnitt 40 aus dem thermoplastischen Elastomer und dem Abschnitt 41 aus Schaum im Bereich der Anlagefläche an der Scheibe 9 angeordnet ist. Dabei ist der Abschnitt 41 so ausgelegt, dass bei Anlegen einer Trennebene an dem äußeren Bereich der Trennfläche 6 eine Senkrechte gezogen werden kann und die äußere Oberfläche an dem Abschnitt 41 benachbart zu der Trennfläche um den Winkel α zurückspringend ausgebildet ist. Hierdurch ist sichergestellt, dass bei der maximalen Kompression des Dichtwulstes 4 eine sichere Abdichtung gewährleistet ist, insbesondere da der äußere Abschnitt 40 zumindest linienförmig an der Glasscheibe 9 anliegt und durch das Profil 7 ein Anpressdruck auf den Abschnitt 40 in Richtung der Glasscheibe 9 übertragen wird. Denn der Abschnitt 41 aus Schaum lässt eine größere Kompression zu als der steifere Abschnitt 40 aus dem thermoplastischen Elastomer.

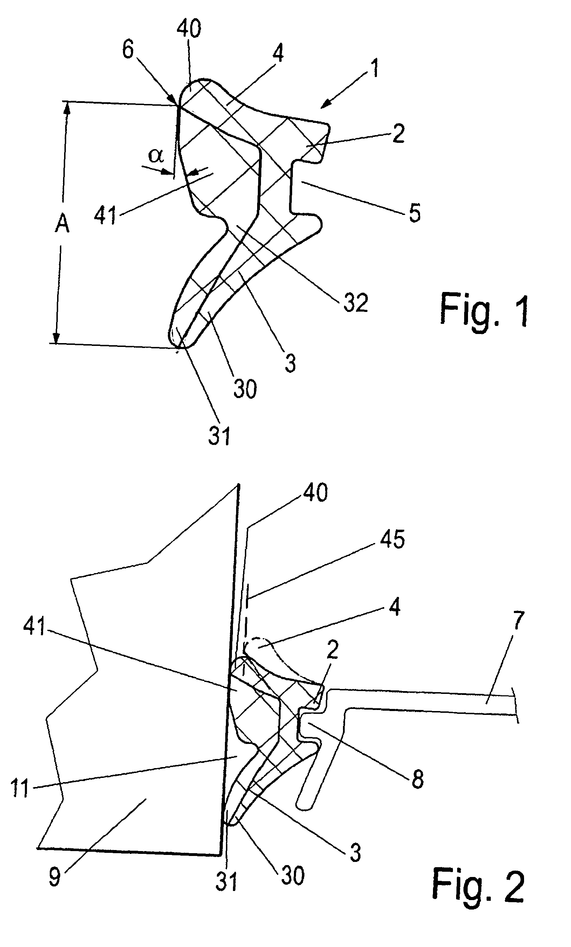

In Figur 2 ist dabei eine gestrichelte Kontur des Abschnittes 40 des Dichtwulstes 4 dargestellt und die gestrichelte Linie 45 deutet die Glasscheibe 9 an, wenn das Dichtungsprofil 1 durch das Profil 7 maximal komprimiert wird. Auch in dieser Position liegt der äußere Abschnitt 40 noch mit einer Dichtlinie an der Glasscheiben 9 an. Dadurch können über das Dichtungsprofil 1 auch Toleranzen im Spaltmaß zwischen Profil 7 und Glasscheibe 9 ausgeglichen werden, ohne die Dichtfunktion zu beeinträchtigen.

Im eingebauten Zustand ist gewährleistet, dass abgesehen von der Dichtlinie benachbart zu der Trennfläche 6 an dem Dichtwulst 4 der übrige Bereich des Dichtungsprofils 1, der der Glasscheibe 9 zugewandt ist, durch die Abschnitte 31 und 41 gebildet ist und somit aus Schaum hergestellt ist. Der Dichtungsbereich A in Figur 1 ist somit wärmeisolierend ausgebildet und reduziert den Wärmeübergang von der Glasscheibe 9 zu dem Profil 7 und umgekehrt.

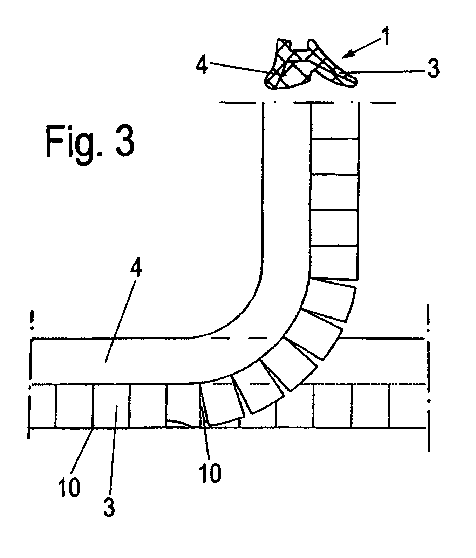

In Figur 3 ist das Dichtungsprofil 1 in Draufsicht in einem Eckbereich dargestellt. Im Bereich der Dichtlippe 3 sind eine Vielzahl von Einschnitten 10 in regelmäßigen Abständen angeordnet, so dass das Dichtungsprofil 1 auch in einem Eckbereich eines Rahmens umlaufend herumgeführt werden kann. Die Einschnitte 10 sind dabei senkrecht zur Längsrichtung des Dichtungsprofils 1 ausgerichtet. Die Länge der Einschnitte 10 erstreckt sich etwa bis in einen mittleren Bereich des Dichtungsprofils.

Die Einschnitte 10 können so ausgebildet sein, dass nur der äußere Abschnitt 30 aus thermoplastischem Elastomer eingeschnitten wird, während der innere Abschnitt 31 durchgängig ausgebildet ist, da der Abschnitt 31 aus Schaum eine höhere Elastizität aufweist und auch um Ecken herumgeführt werden kann. Dadurch wird auch im Eckbereich eine Abdeckung der Glasscheibe 9 durch den Schaum des Abschnittes 31 erreicht.

Der Haltefuß 2 kann wahlweise als Nut oder Steg ausgebildet sein, um eine Kopplung mit einem Profil 7 vornehmen zu können, um das Dichtungsprofil 1 vorfixieren zu können.

Als Material für den wärmeisolierenden Schaum wird vorzugsweise Moosgummi eingesetzt, aber auch andere geschäumte Materialien können verwendet werden.

## Patentansprüche

1. Dichtungsprofil (1, 1'), insbesondere zur Einfassung von Isolierglasscheiben (9) an einem Rahmen, mit einem an einem Profil (7) montierbaren Haltefuß (2, 2'), einem an einer Glasscheibe (9) anlegbaren Dichtwulst (4, 4') und einer Dichtlippe (3, 3'), wobei der Haltefuß (2, 2') und zumindest ein Teil des Dichtwulstes (4, 4') und der Dichtlippe (3, 3') aus einem witterungsbeständigen thermoplastischen Elastomer gebildet sind, wobei der Dichtwulst (4, 4') und die Dichtlippe (3, 3') auf der zur Glasscheibe (9) gewandten Seite überwiegend durch einen Schaum ausgebildet sind, **dadurch gekennzeichnet, dass** der Dichtwulst (4,) und die Dichtlippe (3') an einer Trennfläche (6) zwischen dem thermoplastischen Elastomer und dem Schaum eine Dichtlinie ausbildet, an der das thermoplastische Elastomer an die Glasscheibe (9) anlegbar ist.

2. Dichtungsprofil nach Anspruch 1, **dadurch gekennzeichnet, dass** an der Dichtlippe (3, 3') und/oder dem Dichtwulst (4, 4') der Schaum an die Glasscheibe (9) anlegbar ist.

3. Dichtungsprofil nach Anspruch 1 oder 2, **dadurch gekennzeichnet, dass** sowohl die Dichtlippe (3, 3') als auch der Dichtwulst (4, 4') an einer äußeren dem Profil (7) zugewandten Seite aus dem witterungsbeständigen thermoplastischen Elastomer ausgebildet sind.

4. Dichtungsprofil nach einem der Ansprüche 1 bis 3, **dadurch gekennzeichnet, dass** an dem Dichtwulst (4) und/oder der Dichtlippe (3') zwischen dem thermoplastischen Elastomer und dem Schaum eine Trennebene (6) ausgebildet ist und die äußere Oberfläche benachbart zu dem Schaum gegenüber einer Senkrechten zu der Trennebene (6) zurückspringend ausgebildet ist.

5. Dichtungsprofil nach einem der Ansprüche 1 bis 4, **dadurch gekennzeichnet, dass** die Dichtlippe (3, 3') zu mindestens 30 %, vorzugsweise mindestens 40 % aus Schaum hergestellt ist.

6. Dichtungsprofil nach einem der Ansprüche 1 bis 5, **dadurch gekennzeichnet, dass** das thermoplastische Elastomer als Trägermaterial den Schaum V-förmig umgibt.

7. Dichtungsprofil nach einem der Ansprüche 1 bis 6, **dadurch gekennzeichnet, dass** als Schaum ein Moosgummi vorgesehen ist.

8. Dichtungsprofil nach einem der Ansprüche 1 bis 7, **dadurch gekennzeichnet, dass** als thermoplastisches Elastomer ein EPDM vorgesehen ist.

9. Dichtungsprofil nach einem der Ansprüche 1 bis 8, **dadurch gekennzeichnet, dass** zumindest die Dichtlippe (3, 3') eingeschnitten ist und das Dichtungsprofil (1, 1') im Eckbereich gebogen an einem Rahmen montierbar ist.

## Claims

1. Sealing profile (1, 1'), in particular for mounting insulating glass panes (9) on a frame, with a retaining foot (2, 2') which can be mounted on a profile (7), with a sealing bead (4, 4') which can be placed against a glass pane (9), and with a sealing lip (3, 3'), wherein the retaining foot (2, 2') and at least part of the sealing bead (4, 4') and part of the sealing lip (3, 3') are formed from a weather-resistant thermoplastic elastomer, wherein the sealing bead (4, 4') and the sealing lip (3, 3') are formed predominantly by a foam on the side facing the glass pane (9), **characterized in that**, at a separating surface (6) between the thermoplastic elastomer and the foam, the sealing bead (4) and the sealing lip (3') form a sealing line at which the thermoplastic elastomer can be placed against the glass pane (9).

2. Sealing profile according to Claim 1, **characterized in that** the foam can be placed against the glass pane (9) at the sealing lip (3, 3') and/or the sealing bead (4, 4').

3. Sealing profile according to Claim 1 or 2, **characterized in that** both the sealing lip (3, 3') and the sealing bead (4, 4') are formed from the weather-resistant thermoplastic elastomer on an outer side facing the profile (7).

4. Sealing profile according to one of Claims 1 to 3, **characterized in that** a separating plane (6) is formed on the sealing bead (4) and/or the sealing lip (3') between the thermoplastic elastomer and the foam, and the outer surface adjacent to the foam is set back with respect to a perpendicular to the separating plane (6).

5. Sealing profile according to one of Claims 1 to 4, **characterized in that** the sealing lip (3, 3') is produced to the extent of at least 30%, preferably at least 40%, of foam.

6. Sealing profile according to one of Claims 1 to 5, **characterized in that** the thermoplastic elastomer as carrier material surrounds the foam in a V shape.

7. Sealing profile according to one of Claims 1 to 6, **characterized in that** a foam rubber is provided as the foam.

8. Sealing profile according to one of Claims 1 to 7, **characterized in that** an EPDM is provided as the thermoplastic elastomer.

9. Sealing profile according to one of Claims 1 to 8, **characterized in that** at least the sealing lip (3, 3') is incised and the sealing profile (1, 1') can be mounted on a frame while being bent in the corner region.

## Revendications

1. Profil d'étanchéité (1, 1'), en particulier pour l'encadrement de vitres isolantes (9) au niveau d'un châssis, avec un pied d'arrêt (2, 2') pouvant être monté au niveau d'un profil (7), un renflement d'étanchéité (4, 4') applicable contre une vitre (9) et une lèvre d'étanchéité (3, 3'), dans lequel le pied d'arrêt (2, 2') et au moins une partie du renflement d'étanchéité (4, 4') et de la lèvre d'étanchéité (3, 3') sont formés d'un élastomère thermoplastique résistant aux intempéries, dans lequel le renflement d'étanchéité (4, 4') et la lèvre d'étanchéité (3, 3') sont principalement formés par une mousse du côté tourné vers la vitre (9), **caractérisé en ce que** le renflement d'étanchéité (4) et la lèvre d'étanchéité (3') forment une ligne d'étanchéité au niveau d'une surface de séparation (6) entre l'élastomère thermoplastique et la mousse, au niveau de laquelle ligne l'élastomère thermoplastique est applicable contre la vitre (9).

2. Profil d'étanchéité selon la revendication 1, **caractérisé en ce que** la mousse est applicable contre la vitre (9) au niveau de la lèvre d'étanchéité (3, 3') et/ou du renflement d'étanchéité (4, 4').

3. Profil d'étanchéité selon la revendication 1 ou 2, **caractérisé en ce qu'**aussi bien la lèvre d'étanchéité (3, 3') que le renflement d'étanchéité (4, 4') sont formés, sur un côté extérieur tourné vers le profil (7), de l'élastomère thermoplastique résistant aux intempéries.

4. Profil d'étanchéité selon l'une quelconque des revendications 1 à 3, **caractérisé en ce qu'**un plan de séparation (6) est réalisé au niveau du renflement d'étanchéité (4) et/ou de la lèvre d'étanchéité (3') entre l'élastomère thermoplastique et la mousse, et la surface extérieure est réalisée au voisinage de la mousse en retrait par rapport à une perpendiculaire au plan de séparation (6).

5. Profil d'étanchéité selon l'une quelconque des revendications 1 à 4, **caractérisé en ce que** la lèvre d'étanchéité (3, 3') est constituée d'au moins 30 %, de préférence d'au moins 40 % de mousse.

6. Profil d'étanchéité selon l'une quelconque des revendications 1 à 5, **caractérisé en ce que** l'élastomère thermoplastique entoure la mousse en forme de V comme matériau support.

7. Profil d'étanchéité selon l'une quelconque des revendications 1 à 6, **caractérisé en ce qu'**un caoutchouc cellulaire est prévu comme mousse.

8. Profil d'étanchéité selon l'une quelconque des revendications 1 à 7, **caractérisé en ce qu'**un EPDM est prévu comme élastomère thermoplastique.

9. Profil d'étanchéité selon l'une quelconque des revendications 1 à 8, **caractérisé en ce qu'**au moins la lèvre d'étanchéité (3, 3') est incisée et le profil d'étanchéité (1, 1') peut être monté sur un châssis de façon courbe au niveau du coin.
